# EUROPÄISCHE PATENTSCHRIFT

(11) **EP 3 172 075 B1**
(45) Veröffentlichungstag und Bekanntmachung des Hinweises auf die Patenterteilung: **21.04.2021**
(21) Anmeldenummer: 15738053.6
(22) Anmeldetag: 10.07.2015
(51) Int. Cl.: B60K 15/035, B60K 15/03, B60K 15/077

(54) **TANKSYSTEM EINES KRAFTFAHRZEUGS MIT EINEM VOLUMENVERÄNDERUNGSELEMENT**
TANK SYSTEM FOR A MOTOR VEHICLE COMPRISING A VOLUME MODIFYING ELEMENT
SYSTÈME DE RÉSERVOIR D'UN VÉHICULE AUTOMOBILE COMPORTANT UN ÉLÉMENT DE VARIATION DE VOLUME

(30) Priorität: 21.07.2014 DE 102014214168
(43) Veröffentlichungstag der Anmeldung: 31.05.2017
(73) Patentinhaber: Bayerische Motoren Werke Aktiengesellschaft, 80809 München (DE)
(72) Erfinder: ARRAS, Emmanuel, 80637 München (DE); HUBER, Markus, 80995 München (DE); PRIBIL, Jutta, DK-2450 København SV (DK)
(86) Internationale Anmeldenummer: PCT/EP2015/065891
(87) Internationale Veröffentlichungsnummer: WO 2016/012284

(56) Entgegenhaltungen:
- EP-A2- 1 028 017
- DE-A1-102008 046 586
- US-A- 5 925 817
- US-A1- 2006 071 467
- US-A1- 2007 289 580
- US-B1- 6 533 002
- US-B1- 6 681 789

## Beschreibung

Die Erfindung betrifft ein Tanksystem eines Kraftfahrzeugs mit einem im Innenraum des Kraftstofftanks vorgesehenen Volumenveränderungselement, dessen sog. Ausgleichs-Volumen mit der Umgebung in Verbindung steht. Zum Stand der Technik wird neben der DE 10 2008 046 586 A1 insbesondere auf die US 5,460,135 verwiesen und es kann anstelle des Begriffs des Volumenveränderungselements auch der Begriff "volumenveränderliche Ausdehnungseinrichtung" oder - jedenfalls soweit es die vorliegende Erfindung betrifft auch der Begriff "Dampfdruckausgleichsvorrichtung" verwendet werden.

Die gesetzlichen Anforderungen, welche an die Emissionsfreiheit von Kraftfahrzeug-Tanksystemen gestellt werden, sind mittlerweile extrem hoch. Unter nahezu sämtlichen denkbaren Umständen sollen unter Berücksichtigung unterschiedlicher länderspezifischer Vorschriften (die verschiedenen Staaten der Welt erlassen unterschiedliche Vorschriften) praktisch keine gasförmigen Kraftstoffbestandteile (üblicherweise handelt es sich hierbei um Kohlenwasserstoffe) aus dem Innenraum des Tanks in die Umgebung gelangen. Solche gasförmigen Kraftstoffbestandteile fallen in besonders großer Menge bekanntlich beim Befüllen des Kraftstoff-Tanks mit frischem Kraftstoff an, aber auch bei längerem Stillstand des Kraftfahrzeugs als Folge einer Temperaturerhöhung. In Verbindung mit letztgenanntem kennt der Fachmann den Begriff der "diurnal losses", d.h. der/die Verluste von gasförmigen Kraftstoffbestandteilen bzw. der/die Menge von gasförmigen Kohlenwasserstoff-Emissionen, welche bei längerem Stillstand des Kraftfahrzeugs aufgrund von Temperaturschwankungen (bspw. resultierend durch den Wechsel zwischen Tag und Nacht) aus dem Tank-Innenraum abgeführt werden müssen, um das Entstehen von unzulässig hohem Überdruck im Tank-Innenraum zu vermeiden. Abgeführt werden müssen aber auch Kohlenwasserstoff-Emissionen, die sich aufgrund von Temperaturänderungen im Betrieb des Kraftfahrzeugs im Tank bilden, wobei jeweils die Einhaltung des Dampfdruckgleichgewichts im Tank zu solchen Emissionen führt. Bekanntlich werden zumindest diese nicht beim Befüllen des Kraftstofftanks anfallenden Emissionen in einem Aktivkohlefilter oder dgl., welches vorliegend allgemein als Speichereinheit für gasförmige Kraftstoffbestandteile bezeichnet wird, solange zwischengespeichert, bis eine aus dem Kraftstofftank mit Kraftstoff versorgte (und üblicherweise als Fahrzeug-Antriebsaggregat vorgesehene) Brennkraftmaschine geeignet in Betrieb genommen wird, so dass dann diese Speichereinheit gespült werden kann, wobei die darin zwischengespeicherten Kraftstoffbestandteile der Brennkraftmaschine zur Verbrennung zugeführt werden. Der Vollständigkeit halber sei noch erwähnt, dass es länderspezifisch entweder üblich ist, die beim Befüllen des Tanks anfallenden Kohlenwasserstoff-Emissionen entweder während des Befüllens an der Tankstelle selbst abzusaugen (so bspw. in der Europäischen Union = "ECE-System") oder ebenfalls in einem dann ausreichend groß dimensionierten Aktivkohlefilter bzw. einer entsprechenden Speichereinheit (als ORVR = Onboard refueling vapor recovery bspw. in den USA vorgeschrieben) zu speichern.

Im Hinblick auf eine Vermeidung der geschilderten "diurnal losses" oder sonstiger betriebsbedingter Kohlenwasserstoffemissionen sind bereits Drucktanks vorgeschlagen oder in Serie, in welchen ein entsprechend hoher Überdruck (sowie ein geringer Unterdruck) herrschen kann, so dass von extremen Ausnahmefällen abgesehen keine Abfuhr von Kraftstoffdämpfen aus dem Tank erfolgen muss, jedoch sind solche Drucktanks sehr aufwändig.
Weiterhin bekannt sind Maßnahmen zur Verringerung des Entstehens von gasförmigen Kraftstoffbestandteilen im Tank-Innenraum, insbesondere in Verbindung mit einem Befüllvorgang des Kraftstofftanks, vgl. die eingangs genannte US 5,460,135. Für die USA gilt nämlich, dass sämtliche beim Befüllen eines Fahrzeug-Kraftstofftanks anfallenden gasförmigen Kohlenwasserstoffemissionen in einer fahrzeugeigenen Speichereinheit für gasförmige Kraftstoffbestandteile zwischengespeichert werden müssen. Um deren Menge zu reduzieren, ist in dieser genannten Schrift im Kraftstofftank ein flexibler Luftbeutel vorgesehen, welcher bei vollständig mit Kraftstoff befülltem Tank sein minimales Volumen besitzt und bei Entnahme von flüssigem Kraftstoff aus dem Tank kontinuierlich mit Umgebungsluft befüllt wird, während ein Entleeren dieses Luftbeutels verhindert wird. Damit kann sich oberhalb des Flüssigkeitsspiegels im Tank naturgemäß nur eine geringere Menge von Kraftstoffdämpfen bilden als in einem ansonsten gleichen Tank ohne einen derartigen Luftbeutel. In Zusammenhang mit einem neuerlichen Befüllen des Tanks wird dieser Luftbeutel dann durch den Speicherbehälter bzw. Aktivkohlefilter hindurch in die Umgebung entleert.

Auch in der (eingangs ebenfalls genannten) DE 10 2008 046 586 A1 ist ein flexibler Luft-Beutel oder dergleichen in einem Tank-Innenraum gezeigt, dessen Außenhaut mit dem im Tank-Innenraum befindlichen Kraftstoff in Fluidverbindung steht (d.h. in diesen hineinragt), während der Innenraum dieses Luftbeutels mit der Atmosphäre, d.h. der Umgebungsluft in Verbindung steht. Der in dieser Schrift als Ausdehnungseinrichtung bezeichnete Luft-Beutel kann dabei solchermaßen ausgelegt sein, dass bei den im gesamten Betriebstemperaturbereich des als geschlossenes System ausgelegten Tanks möglichen Volumenänderungen des im Tank befindlichen Fluids kein oder nahezu kein Anstieg des Fluidpegels (= Flüssigkeitsspiegels) im Tank erfolgt, d.h. dass die gesamte oder nahezu die gesamte Volumenänderung des im Tank befindlichen Fluids durch die Ausdehnungseinrichtung kompensiert wird. Damit soll der Austritt schädlicher Gase in die Atmosphäre zuverlässig verhindert und eine bei einer Temperaturerhöhung auftretende Ausdehnung des Kraftstoffs ermöglicht werden.

Vorliegende Erfindung baut nun auf der Erkenntnis auf, dass aufgrund des Dampfdruck-Gleichgewichts in einem Kraftstofftank, welcher nahezu vollständig mit flüssigem Kraftstoff befüllt ist, oberhalb des Flüssigkeitsspiegels weniger gasförmige Kraftstoffbestandteile entstehen, als im gleichen Kraftstofftank, wenn dieser nur noch bspw. zur Hälfte oder noch weniger befüllt ist. Folglich kann mit einem flexiblen Luft-Beutel oder dgl., welcher oberhalb des durch flüssigen Kraftstoff im Tank-Innenraum gebildeten Flüssigkeitsspiegels vorgesehen ist, die Menge von im Tank-Innenraum in den gasförmigen Zustand übergehenden Kraftstoffbestandteilen verringert werden. Im Weiteren wird nun anstelle eines "Luft-Beutels" verallgemeinernd von einem Volumenveränderungselement gesprochen, welches ein veränderliches Ausgleichsvolumen besitzt bzw. einschließt, das mit der Umgebung in Verbindung steht bzw. stehen kann. So kann das Volumenveränderungselement quasi atmen und damit auf geänderte Randbedingungen reagieren. Ferner zeigt die US 5 925 817 A eine vorbekannte Technologie.

Hiermit soll nun ein Tanksystem eines Kraftfahrzeugs mit einem im Innenraum des Kraftstofftanks vorgesehenen Volumenveränderungselement, dessen sog. Ausgleichs-Volumen in Abhängigkeit von bestimmten Randbedingungen mit der Umgebung in Verbindung steht, aufgezeigt werden, mit welchem die aktuellen gesetzlichen Vorschriften wichtiger Länder der Welt, insbesondere auch der USA, hinsichtlich der Verdunstungsemissionen bei Fahrzeug-Tanks unter vertretbarem oder verringertem Aufwand weiter verbessert bzw. mit verringertem Aufwand eingehalten werden können (= Aufgabe der vorliegenden Erfindung).

Die Aufgabe wird gelöst durch ein Tanksystem eines Kraftfahrzeugs mit einem im Innenraum des Kraftstofftanks vorgesehenen Volumenveränderungselement, dessen sog. Ausgleichs-Volumen in Abhängigkeit von bestimmten Randbedingungen mit der Umgebung in Verbindung steht, und das die Merkmale des Anspruchs 1 aufweist.

Die einzige Verbindung zwischen dem Ausgleichs-Volumen des Volumenveränderungselements und der Umgebung ist durch eine Speichereinheit für gasförmige Kraftstoffbestandteile geführt und der Innenraum des Kraftstofftanks ist über eine ansteuerbare Ventileinheit, welche üblicherweise beim Befüllen des Kraftstofftanks sowie bei Überschreiten eines Überdruck-Grenzwertes (zwischen dem Druck im Tank-Innenraum und dem Umgebungsdruck) in der Größenordnung von 5 mbar bis 100 mbar und bei Unterschreiten eines gewissen Unterdruck-Grenzwertes (zwischen dem Druck im Tank-Innenraum und dem Umgebungsdruck), der betragsmäßig nicht größer als der Überdruck-Grenzwert ist, geöffnet und ansonsten geschlossen ist, sowie eine sich an diese Ventileinheit anschließende Speichereinheit für gasförmige Kraftstoffbestandteile mit der Umgebung verbunden.
Vorteilhafte Aus- und Weiterbildungen sind Inhalt der Unteransprüche.

Erfindungsgemäß ist im Tank-Innenraum eine volumenveränderliche und mit der Umgebung (bzw. Atmosphäre) in Verbindung stehende Ausdehnungseinrichtung oder dgl. - hier als Volumenveränderungselement bezeichnet - vorgesehen, welche bzw. welches bspw. unter dem Begriff eines flexiblen Luftbeutels oder unter dem Begriff "Ausdehnungseinrichtung" aus dem vorstehend beschriebenen Stand der Technik grundsätzlich bekannt ist. Erfindungsgemäß steht das sog. Ausgleichs-Volumen des Volumenveränderungselements, d.h. der Rauminhalt des Volumenveränderungselements ausschließlich über eine Speichereinheit für gasförmige Kraftstoffbestandteile mit der Umgebung bzw. Atmosphäre in Verbindung, so dass Umgebungsluft, die aufgrund eines im Tank-Innenraum herrschenden Drucks, welcher zumindest geringfügig unterhalb des Luftdrucks in der Umgebung des mit dem erfindungsgemäßen Tanksystem ausgerüsteten Fahrzeugs liegt, aus der Umgebung in das Volumenveränderungselement strömt, stets die besagte Speichereinheit passieren muss, ehe sie in das Ausgleichs-Volumen gelangt. Ebenso muss und kann Luft, die aufgrund eines im Tank-Innenraum herrschenden Drucks, der um einen höheren Betrag als der genannte Überdruck-Grenzwert oberhalb des Luftdrucks in der Umgebung des mit dem erfindungsgemäßen Tanksystem ausgerüsteten Fahrzeugs liegt, aus dem Ausgleichsvolumen des Volumenveränderungselements in die Umgebung abgeführt wird, stets die besagte Speichereinheit passieren, ehe sie in die Umgebung gelangt. Damit ist (bezüglich des Ausströmens von Luft aus der Volumenveränderungselement in die Umgebung) sichergestellt, dass gasförmige Kraftstoffbestandteile, die vom Tank-Innenraum durch die zur Darstellung der Volumenveränderbarkeit irgendwie flexible Wand des Volumenveränderungselements in dessen Ausgleichsvolumen hinein gelangen bzw. diffundieren, nicht in die Umgebung abgeführt werden, da gasförmige Kraftstoffbestandteile aus dem Ausgleichsvolumen in der Speichereinheit zurückgehalten werden, wenn die solche gasförmigen Kraftstoffbestandteile aufweisenden Luftmenge die Speichereinheit passiert. Beim Einströmen von Luft aus der Umgebung in das Volumenveränderungselement durch die Speichereinheit hindurch dagegen wird die Speichereinheit geringfügig gespült, so dass die in das Volumenveränderungselement hineingeführte Luft bereits gasförmige Kraftstoffbestandteile enthält. Dadurch kann die Neigung, dass über dessen Wand weitere gasförmige Kraftstoffbestandteile vom Tank in den Innenraum des Volumenveränderungselementes hinein diffundieren, zwar nur geringfügig, aber immerhin verringert werden. Im Übrigen ist ein Einströmen von Luft aus der Umgebung in das Volumenveränderungselement auch zum Ausgleich der mit Entnahme von flüssigem Kraftstoff aus dem Tank erfolgenden Zunahme des Volumens oberhalb des besagten Flüssigkeitsspiegels erforderlich, so dass die zum Ausgleich des Volumens von entnommenem Kraftstoff zugeführte Luft später auch nur zu einem geringen Anteil wieder abzuführen ist.

Gegebenenfalls kann das Volumenveränderungselement bzw. dessen Ausgleichs-Volumen quasi als weitere Speichereinheit für gasförmige Kraftstoffbestandteile fungieren, nämlich indem aus der Umgebung durch die eigentliche Speichereinheit für gasförmige Kraftstoffbestandteile hindurch in das Volumenveränderungselement strömende Luft einen Teil der in der Speichereinheit gespeicherten gasförmigen Kraftstoffbestandteile mitnimmt, welche daraufhin im Ausgleichs-Volumen des Volumenveränderungselements gespeichert werden. Zwar müssen bei einem zeitlich späteren möglichen anteiligen Zurückströmen von Luft aus dem Volumenveränderungselement in die Umgebung solche gasförmigen Kraftstoffbestandteile wieder in der besagten Speichereinheit zwischengespeichert werden, jedoch ist dies systembedingt möglich und es wird vorteilhafterweise solchermaßen die Speichereinheit, d.h. deren übliche Aktivkohleschüttung bzw. allgemein deren Sorptionsmittel näher im Bereich ihres/seines Gleichgewichts gehalten und kann damit beim Durchströmen mit frischer Umgebungsluft besser regeneriert werden. Insbesondere jedoch ermöglicht das erfindungsgemäße Volumenveränderungselement ein Schwanken des Partialdrucks im Tank oberhalb des Tank-Flüssigkeitsspiegels innerhalb gewisser Grenzen bei im Wesentlichen unverändertem Gesamtdruck im Kraftstofftank.

Der vorstehend erläuterte mögliche Luftaustausch zwischen dem Ausgleichsvolumen des Volumenveränderungselements und der Umgebung wird oder kann dabei an einem für längere Zeit (bzw. mehr als 24 Stunden) stillstehendem Fahrzeug insbesondere aufgrund der sich damit im Tank einstellenden Temperaturänderungen erfolgen, was bekanntlich in verschiedenen gesetzlichen Zulassungstests (bspw. für den Temperaturbereich von 18°C bis 42°C) nachgefahren wird. Und was das vorstehend genannte fakultative Zwischenspeichern von gasförmigen Kraftstoffbestandteilen im Volumenveränderungselement und das damit in Verbindung stehende anteilige Spülen der besagten Speichereinheit betrifft, so sei zur Vermeidung von Missverständnissen gesagt, dass die tatsächliche Regenerierung dieser Speichereinheit, d.h. ein quasi abschließendes Spülen derselben erst dann erfolgt, wenn Luft aus der Umgebung durch diese Speichereinheit hindurch der genannten Brennkraftmaschine oder dgl., zu deren Versorgung mit Kraftstoff das erfindungsgemäße Tanksystem vorgesehen ist, zur Verbrennung zugeführt wird.

Weiterhin erfindungsgemäß ist das Tanksystem als quasi geschlossenes Niederdruckspeichersystem ausgeführt, d.h. der Kraftstofftank und das Tanksystem sind daraufhin ausgelegt, dass zwischen dem Druck im Innenraum des Kraftstofftanks (und dabei außerhalb des Volumenveränderungselements) und der Umgebung ein geringer Druck-Unterschied in der Größenordnung bis zu ± 100 mbar (Millibar) vorliegen kann, d.h. im Tank-Innenraum kann bis zu (in der Größenordnung von) 100 mbar Überdruck oder Unterdruck - für den Unterdruck kann jedoch auch ein betragsmäßig geringerer Grenzwert vorgesehen sein - herrschen. Selbstverständlich kann auslegungsindividuell sowie insbesondere in Abhängigkeit von der maximal möglichen Größe des Ausgleichs-Volumens des Volumenänderungselements in Relation zum Volumen des Kraftstofftanks und/oder von der (auch hinsichtlich des verwendeten Materials) gewählten Ausgestaltung des Volumenveränderungselements ein geringerer Überdruck-Grenzwert als 100 mbar vorgegeben sein, so bspw. auch ein relativ geringer Überdruck-Grenzwert von 10 mbar. Um nun die Einhaltung dieser Grenzwerte für Überdruck und Unterdruck sicherzustellen, ist in einer sog. Tankentlüftungsleitung, über die der Tank-Innenraum letztlich mit der Umgebung verbunden ist, und in der selbstverständlich (wie grundsätzlich bekannt) eine Speichereinheit für gasförmige Kraftstoffbestandteile vorgesehen ist, eine hierfür geeignete Ventileinheit vorgesehen.

Vorstehend genannte Ventileinheit kann beispielsweise dafür sorgen, dass beim Befüllen des Kraftstofftanks mit frischem Kraftstoff eine gewünschte Verbindung zwischen dem Tank-Innenraum und der Umgebung besteht. Letztere wird beim Befüllen des Tanks (= Betanken) nämlich benötigt, um entweder Kraftstoffdämpfe aus dem Tank über ein Aktivkohlefilter abzuführen oder über diese Verbindung geringe Mengen von Umgebungsluft anzusaugen, falls das Absaugen der Kraftstoffdämpfe aus dem Tank durch die Tankstelle über das Tankeinfüllrohr und die darin eingesteckte Tankzapfpistole erfolgt. Diese Ventileinheit kann bei Überschreiten eines der besagten Differenzdruck-Grenzwerte bspw. auch dann öffnen, wenn die Temperatur im Kraftstofftank bei Betrieb des Fahrzeugs auf höhere Werte ansteigt, als dies üblicherweise bei abgestelltem Kraftfahrzeug geschieht bzw. als bei bereits genannten gesetzlichen Zulassungstests nachgefahren wird.

Es wurde festgestellt, dass es mit einem erfindungsgemäßen Volumenveränderungselement möglich ist, die derzeitigen gesetzlichen Emissionstests für Kraftfahrzeug-Tanksysteme unter Einhaltung der genannten Differenz-Druckgrenzwerte (in der Größenordnung von bis zu circa ± 100 mbar) im Tank-Innenraum problemlos zu bestehen. Mit Ausnahme des Betankens, d.h. des Befüllens des Kraftstofftanks, muss die besagte Ventileinheit in der Tankentlüftungsleitung bei der Durchführung der Diurnal-Emissionstests bei abgestelltem (d.h. nicht betriebenen) Fahrzeug praktisch, d.h. üblicherweise (bzw. von wenigen Ausnahmen abgesehen) nicht öffnen, wenn der maximal mögliche Rauminhalt des Ausgleichs-Volumens des Volumenveränderungselements in der Größenordnung von vorzugsweise 25% bis 40% des Tank-Innenraums liegt. Dabei ist es nicht erforderlich, dass das Volumenveränderungselement mit einer seiner Wände vollflächig auf dem Flüssigkeitsspiegel des im Tank befindlichen flüssigen Kraftstoffs aufliegt; vielmehr kann das Volumenveränderungselement beispielsweise wie in der eingangs weiterhin genannten DE 10 2008 046 586 A1 gezeigt als ein sich nur über einen kleineren Teilbereich des Tank-Innenraums erstreckender Luft-Beutel ausgebildet sein, wobei es ausdrücklich ebenfalls nicht erforderlich ist, dass - wie in der letztgenannten Schrift geschrieben ist - die Wand des Volumenveränderungselements mit dem im Tank befindlichen Kraftstoff in Fluidverbindung steht.

Es wurde bereits erwähnt, dass das Volumenveränderungselement eines erfindungsgemäßen Tanksystems in Form einer elastischen oder auf sonstige Weise verformbaren Blase oder eines solchen Beutels (bspw. im Zustand geringeren Rauminhalts in gefalteter Form vorliegend) ausgebildet sein kann, aber durchaus auch andersartig gestaltet sein kann. Wesentlich ist, dass das Volumenveränderungselement eine geeignet verformbare Wand oder Wandung aufweist, mit Hilfe derer der Rauminhalt bzw. das Ausgleichs-Volumen des Volumenveränderungselements in weitem Umfang veränderbar ist, nämlich von nahezu Null bis zu (wie bereits fakultativ angegeben) vorzugsweise 25% bis 40% des Tank-Innenraums. Dabei ist es stets, also auch im Falle einer elastischen Blase oder eines elastisch verformen Beutels möglich, dass eine verformbare Wand des Volumenveränderungselements das Ausgleichsvolumen vollständig umhüllt; alternativ kann jedoch auch in Zusammenwirken mit einem Abschnitt der Innenwand des Kraftstofftanks das besagte veränderliche und mit der Umgebung in Verbindung stehende Ausgleichs-Volumen durch ein geeignet verformbares Wand-Element des Volumenveränderungselements gebildet sein.

Nach einer vorteilhaften Weiterbildung kann im Kraftstofftank eine das Volumenveränderungselement in seiner größtmöglichen Ausdehnung zumindest abschnittsweise umgebende und Durchtrittsöffnungen für Kraftstoff aufweisende Schwapp-Schutzwand vorgesehen sein. Um die mechanische Belastung des verformbaren Volumenveränderungselements durch beim Fahren des Kraftfahrzeugs auftretende Schwapp-Bewegungen des im Kraftstofftank befindlichen Kraftstoffs zu begrenzen, werden mit Löchern oder dgl. versehene Wände (oder zumindest eine solche Wand) vorgeschlagen, die quasi eine Schutzbox um das ausgedehnte Volumenveränderungselement herum bilden. Die Löcher in der Wand oder den Schwapp-Schutzwänden sind solchermaßen gestaltet, dass sich beim Befüllen des Kraftstofftanks, d.h. bei einer Betankung der Flüssigkeitsspiegel innerhalb und außer der "Schutzbox" um nicht mehr als zwei Zentimeter in der Höhe unterscheidet. Diese teildurchlässige Schwapp-Schutzwand bildet somit einen Strömungswiderstand für Schwapp-Bewegungen des Kraftstoffs im Tank und reduziert die daraus folgende Druckbelastung des Volumenveränderungselements.

Insbesondere bei hohem Füllstand, d.h. hohem Flüssigkeitsspiegel im Kraftstofftank kann das Volumenveränderungselement gegebenenfalls anteilig in den Kraftstoff eintauchen. Wenn somit der Füllstand nach dem bislang üblichen, weit verbreiteten Prinzip eines Hebelgebers gemessen wird, so sollte eine solche Füllstand-Messvorrichtung, deren elektronische Auswerteeinheit zusätzlich einen gegebenenfalls im Kraftstofftank herrschenden (mittels eines Drucksensors) gemessenen Unterdruck berücksichtigen, um Messfehler durch das genannte Eintauchen zu verhindern. Damit ist es nämlich möglich, rechnerisch auf die Eintauch-Tiefe des Volumenveränderungselements in den Flüssigkeitsspiegel zurückzuschließen, bspw. auch im Falle eines sich entfaltenden Beutels (als Volumenveränderungselement), wenn dessen Falt-Verhalten bekannt ist. Die hier vorgeschlagene Berücksichtigung von Unterdruck im Tank bei der Auswertung eines Hebelgeber-Signals ist aber auch anhand eines experimentell (für verschieden Flüssigkeitsspiegel) ermittelten Kennfelds möglich, oder es besteht die Möglichkeit, dass bei Vorliegen von Unterdruck im Tank das aktuelle Messsignal des Hebelgebers überhaupt nicht berücksichtigt wird, sondern auf kürzlich zurückliegende Messwerte, ggf. korrigiert mit aktuellen Kraftstoff-Verbrauchswerten, zurückgegriffen wird.

Ein erfindungsgemäß arbeitendes Volumenveränderungselement sollte möglichst permeationsdicht und in der Lage sein, über viele Tausende von Volumenvergrößerungsvorgängen und Volumenverkleinerungsvorgängen durchzuführen. Hierfür kann das Volumenveränderungselement in Form einer faltbaren Blase oder eines gezielt faltbaren Beutels ausgebildet sein, d.h. ausgelegt sein, sich bspw. nach Art der Origami-Technik für eine Volumen-Vergrößerung selbsttätig zu entfalten und sich für eine VolumenVerringerung selbsttätig zusammen zu falten. Damit kann auch ein ausreichend dichtes Material (auch dicht hinsichtlich Permeation) verwendet werden, wobei zu solchen bspw. origamiartig faltbaren Strukturen oder Behältern bspw. auf den Artikel "Inflatable Cylinders for Deployable Space Structures" von Mark Schenk et al., im internet aufrufbar unter http://www.markschenk.com/research/files/schenk2013-Transformables.pdf verwiesen werden kann, oder auch auf den Artikel "Review of Inflatable Booms for Deployable Space Structures: Packing and Rigidization", unter http://www-g.eng.cam.ac.uk/advancedstructures/files/pdf/2014JSR.pdf.

Es kann die in der Verbindungsleitung zwischen dem Ausgleichs-Volumen des Volumenveränderungselements und der Umgebung vorgesehene Speichereinheit für gasförmige Kraftstoffbestandteile dahingehend ausgelegt sein, im wesentlichen gasförmige Kraftstoffbestandteile, die durch die Wand des Volumenveränderungselements in dessen Ausgleichs-Volumen (AV) hinein diffundieren und dort in extrem geringer Konzentration in der Größenordnung von einigen Tausend ppm (parts per million) vorliegen, aufzunehmen. Übliche mit Schüttung versehene Aktivkohlefilter sind jedoch nicht in der Lage, aus derart geringen Konzentrationen gasförmige Kohlenwasserstoff zu absorbieren, weshalb hier eine kleinere Speichereinheit für gasförmige Kraftstoffbestandteile vorgeschlagen wird, welche als "Low-Bleed-Emission-Aktivkohlefilter" oder "Honeycomb" bezeichnet wird und in solcher Form aus insbesondere für die USA vorgesehene offenen Fahrzeug-Tanksysteme bekannt ist.

Alternativ hierzu kann die vorgenannte Speichereinheit jedoch auch ausgelegt sein, zusätzlich oder hauptsächlich solche gasförmige Kraftstoffbestandteile aufzunehmen, welche bei Betrieb des Kraftfahrzeugs aufgrund hoher Temperaturen im Tank aus diesem oder beim Befüllen des Kraftstofftanks mit frischem Kraftstoff über die besagte und dann offene Ventileinheit aus dem Kraftstofftank abgeführt werden. Für diesen Fall kann - wie weiter oben bereits erwähnt wurde - das Ausgleichs-Volumen des Volumenveränderungselements als weiterer Speicher für gasförmige Kraftstoffbestandteile fungieren, nämlich indem aus der Umgebung durch die eigentliche Speichereinheit für gasförmige Kraftstoffbestandteile hindurch in das Volumenveränderungselement strömende Luft einen Teil der in der Speichereinheit gespeicherten gasförmigen Kraftstoffbestandteile mitnimmt, welche daraufhin im Ausgleichs-Volumen des Volumenveränderungselements gespeichert werden.

Erfindungsgemäß weist das Tanksystem in seiner Gesamtheit zwei Speichereinheiten für gasförmige Kraftstoffbestandteile auf, nämlich eine erste sich vom Tank-Innenraum aus gesehen an die besagte (auch als Niederdruck-Tankabsperrventil bezeichnete) Ventileinheit anschließende größere Speichereinheit, welche als Aktivkohlefilter für die Betankung und/oder für hohe Tank-Druckwerte bei Betrieb des Kraftfahrzeugs fungiert, sowie eine zweite sich in der Tankentlüftungsleitung betrachtet vom Tank-Innenraum in Richtung Umgebung an die erste Speichereinheit anschließende kleinere Speichereinheit wie der vorstehend genannte "Low-Bleed-Emission-Aktivkohlefilter" oder "Honeycomb". Eine vorzugsweise einzige Verbindungsleitung mit dem Ausgleichs-Volumen des Volumenveränderungselements mündet erfindungsgemäß dann entweder in einer Verbindung zwischen der ersten Speichereinheit und der zweiten Speichereinheit (für gasförmige Kraftstoffbestandteile) oder alternativ vom Volumenveränderungselement ausgehend betrachtet in die erste Speichereinheit bzw. stromauf derselben in eine die genannte Ventileinheit enthaltende Tankentlüftungsleitung stromab dieser genannten Ventileinheit.

Die beigefügte **Figur 1** zeigt in Form einer Prinzipskizze ein erstes Ausführungsbeispiel eines erfindungsgemäßen Tanksystems, während in **Figur 2** eine alternative Ausführungsform dargestellt ist. **Figur 3** zeigt ebenfalls auf das Wesentliche abstrahiert eine alternative Ausführungsform eines im Tank vorgesehenen Volumenveränderungselements und in **Figur 4** ist ein als Weiterbildung vorgeschlagenes Schwapp-Schutzblech abstrahiert dargestellt.

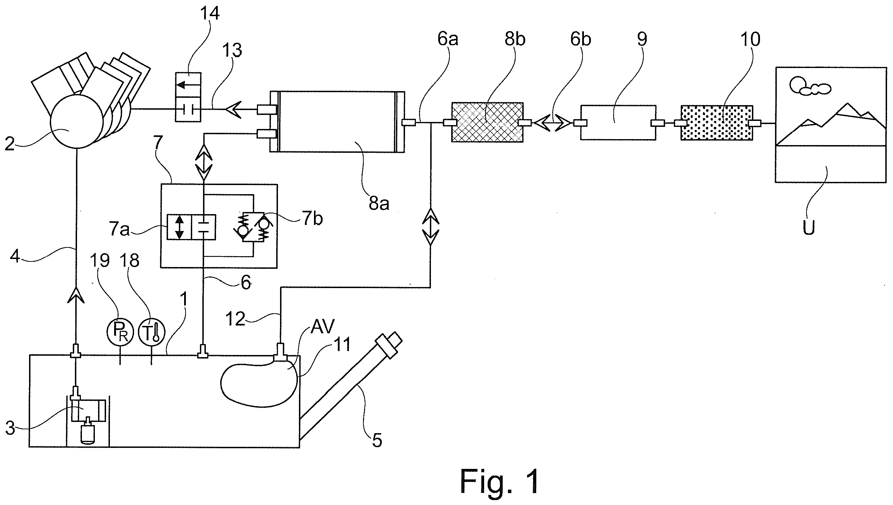

Zunächst auf **Fig.1** Bezug nehmend trägt ein Tank bzw. Kraftstoff-Tank eines Kraftfahrzeugs die Bezugsziffer 1 und eine aus diesem Tank mit Kraftstoff versorgte Brennkraftmaschine die Bezugsziffer 2. Zu dieser gelangt der mittels einer im Tank 1 vorgesehenen Pumpeneinheit 3 geförderte Kraftstoff über eine Versorgungsleitung 4. Ein Befüllstutzen, über den Kraftstoff in den Tank 1 nachgefüllt werden kann, trägt die Bezugsziffer 5.

Eine Tankentlüftungsleitung 6 führt vom Innenraum des Tanks 1 durch eine Ventileinheit 7 zu einer ersten mit einem Adsorptionsmittel für gasförmige Kraftstoffbestandteile befüllten Speichereinheit 8a bzw. es mündet die Entlüftungsleitung 6 im Innenraum einer als sog. Aktivkohlefilter fungierenden mit der Bezugsziffer 8a gekennzeichneten Speichereinheit für gasförmige und über die Entlüftungsleitung 6 bei geöffneter Ventileinheit 7 aus dem Tank-Innenraum abgeführte gasförmige Kraftstoffbestandteile. Am anderen Ende dieser ersten Speichereinheit 8a setzt sich die Entlüftungsleitung 6 als Leitung 6a fort und mündet in einer zweiten auch als "Honeycomb" oder "Low-Bleed-Emission-Aktivkohlefilter" bezeichneten Speichereinheit 8b für gasförmige Kraftstoffbestandteile, welche ebenfalls eine Aktivkohle, jedoch mit anderen Speichereigenschaften enthält. Aus dieser zweiten Speichereinheit 8b austretend führt die Tankentlüftungsleitung 6 als Leitung 6b weiter über eine Tankleckdiagnose-Einheit 9 (= NVLD = Natural Vacuum Leak Detection) und ein Staubfilter 10 in die Umgebung U.

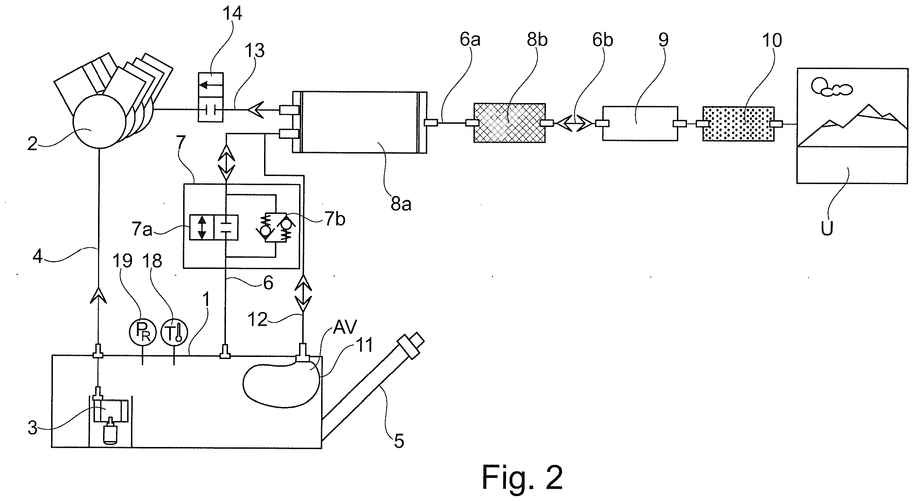

Im Innenraum des Tanks 1 ist ein hier (bei den Ausführungsbeispielen nach den Figuren 1, 2) als flexible und auch elastisch verformbare Blase ausgeführtes Volumenveränderungselement 11 vorgesehen, das in sich ein Ausgleichs-Volumen AV einschließt, welches über eine Belüftungsleitung 12 mit der Umgebung U in Verbindung steht. Hierfür durchdringt die im Ausgleichs-Volumen AV des Volumenveränderungselements 11 mündende Belüftungsleitung 12 die Wand des Tanks 1 und mündet schließlich in der Leitung 6a, welche wie bereits erläutert die erste Speichereinheit 8a mit der zweiten Speichereinheit 8b verbindet. Was die Verbindung des Ausgleichs-Volumens AV des Volumenveränderungselements 11 mit der Umgebung U betrifft, so ist diese in Form der Belüftungsleitung 12 beim Ausführungsbeispiel nach Figur 1 durch die Speichereinheit 8b für gasförmige Kraftstoffbestandteile geführt. Die Funktion dieses Volumenveränderungselements 11 wurde vor der Figurenbeschreibung ausführlich erläutert.

Ebenso grundsätzlich erläutert wurde bereits die Funktion der auch als Niederdruck-Tankabsperrventil bezeichneten Ventileinheit 7, welche hier durch eine Parallelschaltung zweier Ventilelemente 7a, 7b gebildet ist. Beim ersten Ventilelement 7a handelt es sich um ein von einer elektronischen Steuereinheit ansteuerbares Sperrventil, das üblicherweise beim Betanken und bei Überschreitung eines vorgegebenen Grenzdrucks im Tank 1 in seine Offenstellung gebracht wird und ansonsten geschlossen ist. Insbesondere im Hinblick auf das Vermeiden einer Grenzdruck-Überschreitung (sowohl bezüglich Überdruck als auch bezüglich Unterdruck) wird das erste Ventilelement 7a von einem die Temperatur T im Tank 1 messenden Sensor 18 in Kombination mit einem den Druck P im Tank 1 messenden Sensor 19 geeignet angesteuert, während ein bevorstehender oder durchgeführter Betankungsvorgang beispielsweise über eine vom Nutzer des Kraftfahrzeugs zu betätigende Betankungswunschtaste oder einen Tankklappensensor erkannt werden kann.

Beim zweiten Ventilelement 7b handelt es sich hier um eine Paarung von parallel geschaltet einander entgegen gerichteten Rückschlagventilen, welche erst bei Vorliegen eines Mindestdrucks selbsttätig öffnen. Diese Rückschlagventile bzw. dieses zweite Ventilelement 7b sind/ist solchermaßen ausgelegt, dass diese erst bei Druckwerten im Innenraum des Tanks 1 (abseits des Volumenveränderungselements 11), welche betragsmäßig um bspw. 100 mbar vom in der Umgebung herrschenden Druck beabstandet sind, öffnen bzw. öffnet, d.h. dieses zweite (dem ersten Ventilelement 7a funktional parallel geschaltete) Ventilelement 7b der Ventileinheit 7 öffnet dann, wenn im Tank-Innenraum entweder ein Überdruck von ca. 100 mbar herrscht, wonach Kraftstoffdämpfe aus dem Tank-Innenraum in die beiden Speichereinheiten 8a, 8b gelangen, wo die gasförmigen Kraftstoffbestandteile zurückgehalten werden, während die Luft in die Umgebung U gelangt, welcher Überdruck damit abgebaut wird, oder wenn im Tank-Innenraum ein Unterdruck von ca. 100 mbar herrscht, wonach Luft aus der Umgebung durch die Speichereinheiten 8a, 8b in den Tank-Innenraum gelangt, welcher Unterdruck damit abgebaut wird. Abweichend von vorstehender Erläuterung können die Rückschlagventile des Ventilelements 7b hinsichtlich ihres Öffnens aber auch auf verschiedene Differenzdruckwerte hin und/oder andere Absolutwerte ausgelegt sein, derart, dass das Ventilelement 7b vom Tank 1 zur Umgebung U (bzw. zur Speichereinheit 8a) hin erst dann öffnet, wenn im Tank ein Überdruck-Grenzwert von bspw. 70 mbar erreicht ist, während das Ventilelement 7b von der Umgebung U (bzw. von der Speichereinheit 8a) zum Tank 1 hin erst dann öffnet, wenn im Tank ein Unterdruck-Grenzwert erreicht ist, der betragsmäßig geringer oder nicht höher als der vorstehend genannte Überdruck-Grenzwert ist und bspw. in der Größenordnung von 30 mbar liegen kann. (Dieser Unterdruck-Grenzwert kann dabei durch die maximal zulässige Belastung des Volumenveränderungselements 11 durch Überdruck im Ausgleichs-Volumen AV vorgegeben sein). Grundsätzlich sei darauf hingewiesen, dass die vorstehend in Zahlen genannten Druckwerte keine Beschränkung für die vorliegende Erfindung darstellen, d.h. diese Druckwerte können wie für den jeweiligen Anwendungsfall sinnvoll ist, gewählt werden. Die Größenordnung, innerhalb derer sinnvolle Druckwerte liegen, erstreckt sich jedoch in einem Bereich von circa 5 mbar bis ca. 100 mbar.

Bei Stillstand des Kraftfahrzeugs über eine praktisch unbegrenzte oder zumindest größere Zahl von Tagen hinweg soll jedoch an einem erfindungsgemäßen Tanksystem diese Ventileinheit 7 überhaupt nicht öffnen. Vielmehr erfolgt dann die Kompensation des aufgrund unterschiedlicher Umgebungstemperaturen (insbesondere durch Tag und Nacht) unterschiedlichen Volumens des im Tank-Innenraum befindlichen Kraftstoffs bzw. von dessen Dampfdruckänderung alleine durch eine Volumenänderung des Volumenveränderungselements 11, welches hierfür über die Belüftungsleitung 12 sowie die zweite Speichereinheit 8b entweder Luft aus dem Ausgleichs-Volumen AV des Volumenveränderungselements 11 an die Umgebung abgibt oder aus der Umgebung U aufnimmt. Dieser Prozess des Sich-Ausdehnens des Volumenveränderungselements 11 bei einer Vergrößerung des Ausgleichs-Volumens AV bzw. des Sich-Verkleinerns des Volumenveränderungselements 11 bei einer Verringerung des Ausgleichs-Volumens AV durch Luftaustausch mit der Umgebung U kann sich bei geeigneter Dimensionierung der betroffenen Bauelemente praktisch fortsetzen, ohne dass eine zunehmende Verdunstung von Kraftstoff im Tank 1 ein Öffnen der Ventileinheit 7 erforderlich macht..

Figur 2 zeigt (unter Verwendung gleicher Bezugsziffern für gleiche Bauteile wie bei Fig.1) eine andere Ausführungsform, wobei der einzige aber erhebliche Unterschied zu Fig.1 darin besteht, dass die Belüftungsleitung 12 des Volumenveränderungselements 11 stromauf der Speichereinheit 8a, d.h. zwischen der Ventileinheit 7 und der Speichereinheit 8a in der Tankentlüftungsleitung 6 mündet. Hierbei werden beide Speichereinheiten (8a, 8b) und insbesondere auch die Speichereinheit 8a zumindest geringfügig gespült, wenn frische Umgebungs-Luft durch diese hindurch in das Ausgleichs-Volumen AV des Volumenveränderungselements 11 gelangt. Damit kann - wie vor der Figurenbeschreibung erläutert wurde - das Ausgleichs-Volumen AV des Volumenveränderungselements 11 quasi als weiterer Speicher für gasförmige Kraftstoffbestandteile fungieren, mit dem Vorteil, dass die Aktivkohleschüttung der Speichereinheit 8a näher im Bereich ihres Gleichgewichts gehalten wird, was die Wahrscheinlichkeit eines eventuellen Durchbruchs dieser Speichereinheit 8a weiter verringert.

Ein Spülen bzw. Regenerieren der Speichereinheiten 8a, 8b, welche sowohl bei der Ausführungsform nach Fig.1 als auch bei der Ausführungsform nach Fig.2 neben der Aufnahme von durch die Wand des Volumenveränderungselements 11 in dessen Ausgleichs-Volumen AV hinein diffundierenden Kraftstoffbestandteilen insbesondere bei einer Betankung, d.h. Befüllung des Tanks 1 mit frischem Kraftstoff und ggf. bei Überschreiten von Druckgrenzwerten im Tank 1 werden, erfolgt wie bei heutigen Tanksystemen üblich. Bei in Betrieb befindlicher Brennkraftmaschine 2 gelangt für das Spülen der Speichereinheiten 8a, 8b Luft aus der Umgebung U über die Leitung 6b in die zweite Speichereinheit 8b und weiter durch die Leitung 6a und die erste Speichereinheit 8a durch eine Spülleitung 13, in der ein dann offenes, aber ansonsten geschlossenes Spülventil 14 vorgesehen ist, in die Brennräume der Brennkraftmaschine 2, wo die in den beiden Speichereinheiten 8a, 8b zuvor zwischengespeicherten und von der Spül-Luft mitgenommenen gasförmigen Kraftstoffbestandteile verbrannt werden. An dieser Stelle sei nochmals erwähnt, dass sich eine Überschreitung von Druckgrenzwerten im Tank praktisch nur dann einstellen kann, wenn das Kraftfahrzeug betrieben oder betankt wird, und dass nur dann gasförmige Kraftstoffbestandteile in den Speichereinheiten gespeichert werden müssen, wenn das Ventilelement 7a oder das Ventilelement 7b der Ventileinheit 7 geöffnet ist, was bei längerem Stillstand des Fahrzeugs nicht stattfindet bzw. nicht erfolgen soll.

Als Vorteil eines erfindungsgemäßen Tanksystems sei noch genannt, dass - neben der Erfüllung der Aufgabe der vorliegenden Erfindung - die Verwendung einer üblichen passiven Tankleckdiagnose-Einheit 9 (wie bei offenen Tanksystemen bekannt) möglich ist, obwohl das vorliegende Tanksystem als sog. quasi geschlossenes Niederdruckspeichersystem ausgeführt ist, in welchem zwischen dem Druck im Innenraum des Kraftstofftanks 1 (und dabei außerhalb des Volumenveränderungselements 11) und der Umgebung U ein geringer Druck-Unterschied in der Größenordnung bis zu ± 100 mbar (Millibar) vorliegen kann bzw. bzw. jedenfalls über eine längere Stillstandphase des Fahrzeugs betrachtet vorliegt.

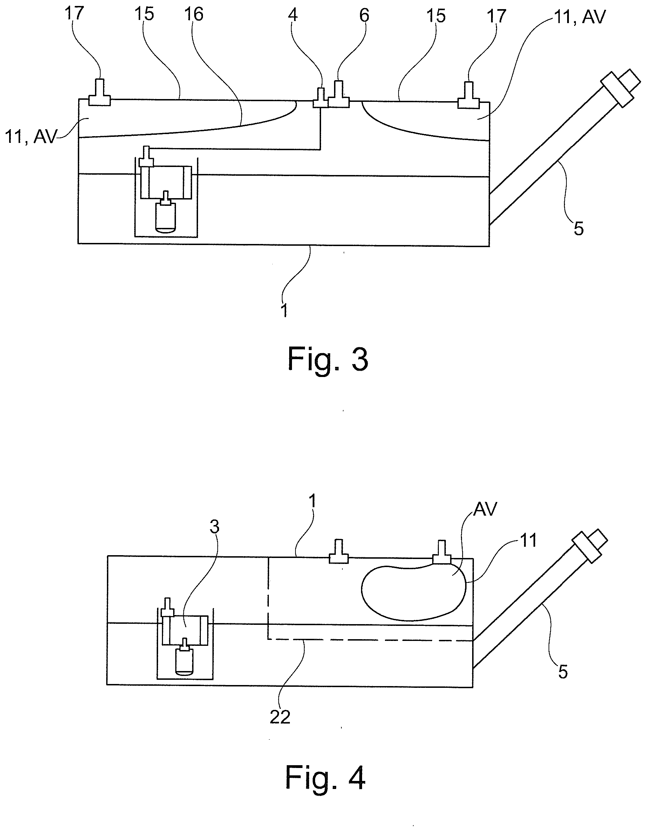

**Figur 3** zeigt eine alternative Ausführungsform eines im Tank 1 vorgesehenen Volumenveränderungselements 11, welches abschnittsweise durch einen Innenwand-Abschnitt 15 des Tanks 1 begrenzt wird, wobei ein flexibler Wandabschnitt 16 des Volumenveränderungselements 11 durch eine geeignet am Rand des Innenwand-Abschnitts 15 befestigte Membrane 16 gebildet ist. Vorliegend sind dabei in zwei Eckbereichen des Tank-Innenraums solche Membranen 16 vorgesehen, so dass zwei über Belüftungsstutzen 17, die mit der Belüftungsleitung 12 aus Fig.1 verbunden sind, zueinander parallel geschaltete Volumenveränderungselemente 11 vorgesehen sind, die jeweils ein Ausgleichs-Volumen AV bilden.

**Figur 4** schließlich zeigt eine vor der Figurenbeschreibung bereits erläuterte Schwapp-Schutzwand 22 für das Volumenveränderungselement 11 in stark abstrahierter Form, in der Durchbrüche oder Löcher vorgesehen sind, so dass Kraftstoff durch diese Durchbrüche oder Löcher hindurch auch in einen bzw. den von der Schwapp-Schutzwand 22 umschlossenen Raum, in welchem sich das dort befindende Volumenveränderungselement 11 bis auf seine maximal zulässige Größe ausdehnen kann, gelangen kann. Dabei erfolgt jedoch der Durchtritt von Kraftstoff in besagten Raum gedrosselt, so dass das Volumenveränderungselement 11 von Schwappbewegungen des Kraftstoffs im Tank 1, die bekanntlich bei bewegten Kraftfahrzeug entstehen, nur in gedämpften Ausmaß getroffen wird.

## Patentansprüche

1. Tanksystem eines Kraftfahrzeugs mit einem im Innenraum des Kraftstofftanks (1) vorgesehenen Volumenveränderungselement (11), dessen sog. Ausgleichs-Volumen (AV) in Abhängigkeit von Randbedingungen mit der Umgebung (U) in Verbindung steht, umfassend die folgenden Merkmale:
• der Innenraum des Kraftstofftanks (1) ist über eine Ventileinheit (7), welche beim Befüllen des Kraftstofftanks (1) sowie bei Überschreiten eines Überdruck-Grenzwertes in der Größenordnung von bis zu 100 mbar und bei Unterschreiten eines gewissen betragsmäßig nicht oberhalb des Überdruck-Grenzwertes liegenden Unterdruck-Grenzwertes zwischen dem Druck im Tank-Innenraum und dem Umgebungsdruck geöffnet und ansonsten geschlossen ist, sowie eine sich an diese Ventileinheit (7) anschließende erste Speichereinheit (8a) für gasförmige Kraftstoffbestandteile mit der Umgebung verbunden; und
• die Verbindung zwischen dem Ausgleichs-Volumen (AV) des Volumenveränderungselements (11) und der Umgebung (U) ist durch eine zweite Speichereinheit (8b) für gasförmige Kraftstoffbestandteile geführt;
• wobei sich die erste Speichereinheit (8a) vom Tank-Innenraum aus gesehen an die Ventileinheit (7) anschließt;
• wobei sich die zweite Speichereinheit (8b) in Richtung Umgebung (U) an die erste Speichereinheit (8a) anschließt; und
• wobei eine Belüftungsleitung (12) des Ausgleichs-Volumens (AV) des Volumenveränderungselements (11)
i) in eine Verbindung (6a) zwischen der ersten mit einem Adsorptionsmittel für gasförmige Kraftstoffbestandteile befüllten Speichereinheit (8a) und der zweiten Speichereinheit (8b) mündet,
ii) in die erste Speichereinheit (8a) mündet, oder
iii) stromauf der ersten Speichereinheit (8a) und stromab der Ventileinheit (7) in eine die Ventileinheit (7) enthaltende Tankentlüftungsleitung (6) mündet.

2. Tanksystem nach Anspruch 1, wobei das Volumenveränderungselement (11) und die Ventileinheit (7) solchermaßen ausgelegt sind, dass dem für mehrere Tage abgestelltem Tanksystems des Kraftfahrzeugs keine Menge von gasförmigen Kohlenwasserstoff-Emissionen entsteht, welche durch Änderungen der Umgebungstemperatur entsteht und aus dem Tank-Innenraum abgeführt werden muss, um das Entstehen von unzulässsig hohem Überdruck im Tank-Innenraum zu vermeiden, indem das Dampfdruckgleichgewicht im Kraftstofftank (1) durch selbsttätige Zufuhr und Abfuhr von Umgebungsluft in das oder aus dem Volumenveränderungselement (11) soweit einhaltbar ist, dass die Ventileinheit (7) geschlossen bleibt.

3. Tanksystem nach Anspruch 1 oder 2, wobei der maximale Rauminhalt des Ausgleichs-Volumens (AV) des Volumenveränderungselements (11) in der Größenordnung von 25% bis 40% des Tank-Innenraums liegt.

4. Tanksystem nach einem der vorangegangenen Ansprüche, wobei das Volumenveränderungselement (11) in Form einer elastischen und/oder geeignet verformbaren Blase oder eines solchen Beutels ausgebildet ist, welche entweder vollständig oder in Zusammenwirken mit einem Abschnitt (15) der Innenwand des Kraftstofftanks (1) das besagte veränderliche und mit der Umgebung in Verbindung stehende Ausgleichs-Volumen (AV) bildet.

5. Tanksystem nach einem der vorangegangenen Ansprüche, mit einer im Kraftstofftank (1) vorgesehenen und das Volumenveränderungselement (11) in seiner größtmöglichen Ausdehnung zumindest abschnittsweise umgebenden und Durchtrittsöffnungen für Kraftstoff aufweisenden Schwapp-Schutzwand (22).

6. Tanksystem nach einem der vorangegangenen Ansprüche mit einer nach dem Prinzip eines Hebelgebers arbeitenden Messvorrichtung für den Kraftstoff-Füllstand im Kraftstofftank (1), deren elektronische Auswerteeinheit zusätzlich einen gegebenenfalls im Kraftstofftank (1) herrschenden Unterdruck berücksichtigt.

7. Tanksystem nach einem der vorangegangenen Ansprüche, wobei das Volumenveränderungselement (11) in Form einer faltbaren Blase oder eines faltbaren Beutels ausgebildet ist, sich für eine Volumen-Vergrößerung selbsttätig zu entfalten und sich für eine VolumenVerringerung selbsttätig zusammen zu falten.

8. Tanksystem nach einem der vorangegangenen Ansprüche, wobei die zweite Speichereinheit (8b) wie die erste Speichereinheit (8a) eine Aktivkohle enthält, jedoch mit anderen Speichereigenschaften.

9. Tanksystem nach einem der vorangegangenen Ansprüche, wobei die zweite Speichereinheit (8b) kleiner ausgebildet ist als die erste Speichereinheit (8a).

10. Tanksystem nach einem der vorherigen Ansprüche, wobei die erste Speichereinheit (8a) für die Betankung und/oder für hohe Tank-Druckwerte bei Betrieb des Kraftfahrzeugs vorgesehen ist.

## Claims

1. Tank system of a motor vehicle with a volume modifying element (11) provided in the inner chamber of the fuel tank (1), the so-called compensation volume (AV) of said volume modifying element being connected to the surroundings (U) depending on boundary conditions, comprising the following features:
• the inner chamber of the fuel tank (1) is connected to the surroundings via a valve unit (7), which is open when the fuel tank (1) is being filled as well as when an overpressure limit value in the magnitude of up to 100 mbar is exceeded and when a specific negative pressure limit value, that is not quantitatively above the overpressure limit value, between the pressure in the inner chamber of the tank and the surrounding pressure is fallen short of, and is otherwise closed, as well as a first storage unit (8a) for gaseous fuel components connecting to said valve unit (7); and
• the connection between the compensation volume (AV) of the volume modifying element (11) and the surroundings (U) is guided through a second storage unit (8b) for gaseous fuel components;
• wherein the first storage unit (8a), when viewed from the inner chamber of the tank, connects to the valve unit (7);
• wherein the second storage unit (8b) connects to the first storage unit (8a) in the direction of the surroundings (U); and
• wherein a ventilation line (12) of the compensation volume (AV) of the volume modifying element (11)
i) runs into a connection (6a) between the first storage unit (8a), which is filled with an adsorbent for gaseous fuel components, and the second storage unit (8b),
ii) runs into the first storage unit (8a), or
iii) runs into a tank ventilation line (6), comprising the valve unit (7), upstream of the first storage unit (8a) and downstream of the valve unit (7).

2. Tank system according to Claim 1, wherein the volume modifying element (11) and the valve unit (7) are designed such that, for the tank system of the motor vehicle that is in a switched-off state for several days, no quantity of gaseous hydrocarbon emissions is formed, these being formed due to changes in the ambient temperature and having to be removed from the inner chamber of the tank to avoid creating an impermissibly high overpressure in the inner chamber of the tank in that the vapor pressure equilibrium in the fuel tank (1) can be maintained by the independent intake and removal of ambient air into or from the volume modifying element (11) to the extent that the valve unit (7) remains closed.

3. Tank system according to Claim 1 or 2, wherein the maximum capacity of the compensation volume (AV) of the volume modifying element (11) is in a magnitude of 25% to 40% of the inner chamber of the tank.

4. Tank system according to any one of the preceding claims, wherein the volume modifying element (11) is developed in the form of an elastic and/or suitably deformable bubble or a bag which either completely or in cooperation with a section (15) of the inner wall of the fuel tank (1) forms the aforementioned compensation volume (AV), which is modifiable and connected to the surroundings.

5. Tank system according to any one of the preceding claims, comprising a slosh protection wall (22) that is provided in the fuel tank (1) and in its maximum expansion at least partially encloses the volume modifying element (11) and has through-openings for fuel.

6. Tank system according to any one of the preceding claims having a measuring device for the fuel filling level in the fuel tank (1), which works according to the principle of a lever sensor, the electronic evaluation unit of said measuring device additionally taking into account a negative pressure in the fuel tank (1), if applicable.

7. Tank system according to any one of the preceding claims, wherein the volume modifying element (11) is developed in the form of a foldable bubble or a foldable bag so as to unfold automatically for a volume enlargement and to fold up automatically for a reduction of volume.

8. Tank system according to any one of the preceding claims, wherein the second storage unit (8b), like the first storage unit (8a), contains an activated carbon, but with different storage properties.

9. Tank system according to any one of the preceding claims, wherein the second storage unit (8b) is formed so as to be smaller than the first storage unit (8a).

10. Tank system according to any one of the preceding claims, wherein the first storage unit (8a) is provided for the refueling and/or for high tank pressure values when the motor vehicle is in operation.

## Revendications

1. Système de réservoir d'un véhicule automobile comportant un élément de variation de volume (11) qui est prévu dans l'espace l'intérieur du réservoir de carburant (1), dont le volume dit d'équilibrage (AV) est en communication avec l'environnement (U) en fonction de conditions aux limites, comprenant les caractéristiques suivantes :
• l'espace intérieur du réservoir de carburant (1) est relié à l'environnement par une unité de soupape (7), qui est ouverte lors du remplissage du réservoir de carburant (1) ainsi qu'en cas de franchissement vers le haut d'une valeur limite de surpression de l'ordre de 100 mbar au maximum et en cas de franchissement vers le bas d'une certaine valeur limite de dépression non supérieure à la valeur limite de surpression et se situant entre la pression à l'intérieur du réservoir et la pression ambiante, et qui est sinon fermée, ainsi qu'une première unité de stockage (8a), destinée à des composants gazeux du carburant et se raccordant à ladite unité de soupape (7), qui est reliée à l'environnement ; et
• la liaison entre le volume d'équilibrage (AV) de l'élément de variation de volume (11) et l'environnement (U) est assurée par une deuxième unité de stockage (8b) destinée à des composants gazeux du carburant ;
• dans lequel la première unité de stockage (8a) se raccorde à l'unité de soupape (7), vue depuis l'espace intérieur du réservoir ;
• dans lequel la deuxième unité de stockage (8b) se raccorde à la première unité de stockage (8a) dans la direction de l'environnement (U) ; et
• dans lequel un conduit de ventilation (12) du volume d'équilibrage (AV) de l'élément de variation de volume (11)
i) débouche dans un conduit (6a) entre la première unité de stockage (8a) remplie d'un agent d'adsorption pour des composants gazeux du carburant et la deuxième unité de stockage (8b),
ii) débouche dans la première unité de stockage (8a), ou ii) débouche, en amont de la première unité de stockage (8a) et en aval de l'unité de soupape (7), dans un conduit de ventilation de réservoir (6) contenant l'unité de soupape (7).

2. Système de réservoir selon la revendication 1, dans lequel l'élément de variation de volume (11) et l'unité de soupape (7) sont conçus de telle sorte que le système de réservoir du véhicule automobile, qui est au repos pendant plusieurs jours, ne produise aucune quantité d'émissions d'hydrocarbures gazeux qui résultent de variations de la température ambiante et qui doivent être évacuées de l'espace intérieur du réservoir afin d'éviter l'apparition d'une surpression excessivement élevée dans l'espace intérieur du réservoir, en faisant en sorte que l'équilibre de la pression de vapeur dans le réservoir de carburant (1) puisse être maintenu par apport et évacuation automatiques d'air ambiant dans ou hors de l'élément de variation de volume (11), de telle sorte que l'unité de soupape (7) reste fermée.

3. Système de réservoir selon la revendication 1 ou 2, dans lequel la capacité maximale du volume d'équilibrage (AV) de l'élément de variation de volume (11) est de l'ordre de 25 à 40 % de l'espace intérieur du réservoir.

4. Système de réservoir selon l'une des revendications précédentes, dans lequel l'élément de variation de volume (11) est réalisé sous la forme d'une poche ou d'un sac, élastique et/ou convenablement déformable qui, soit entièrement soit en coopération avec une partie (15) de la paroi intérieure du réservoir de carburant (1), forme ledit volume d'équilibrage variable (AV) en communication avec l'environnement.

5. Système de réservoir selon l'une des revendications précédentes, comportant une paroi de protection contre le ballottement (22) qui est prévue dans le réservoir de carburant (1) et qui entoure l'élément de variation de volume (11) suivant sa plus grande étendue possible, au moins par sections, et qui présente des ouvertures de passage pour le carburant.

6. Système de réservoir selon l'une des revendications précédentes, comportant un dispositif de mesure du niveau de carburant dans le réservoir de carburant (1) fonctionnant selon le principe d'un capteur à levier, dont l'unité d'évaluation électronique tient compte en outre d'une dépression régnant éventuellement dans le réservoir de carburant (1).

7. Système de réservoir selon l'une des revendications précédentes, dans lequel l'élément de variation de volume (11) est réalisé sous la forme d'une poche pliable ou d'un sac pliable pouvant se déplier automatiquement pour une augmentation de volume et se replier automatiquement pour une réduction de volume.

8. Système de réservoir selon l'une des revendications précédentes, dans lequel la deuxième unité de stockage (8b) contient un charbon actif comme la première unité de stockage (8a), mais avec des propriétés de stockage différentes.

9. Système de réservoir selon l'une des revendications précédentes, dans lequel la deuxième unité de stockage (8b) est réalisée plus petite que la première unité de stockage (8a).

10. Système de réservoir selon l'une des revendications précédentes, dans lequel la première unité de stockage (8a) est prévue pour le ravitaillement et/ou pour des valeurs de pression de réservoir élevées lors du fonctionnement du véhicule automobile.
